# EUROPÄISCHE PATENTSCHRIFT

(11) **EP 3 951 282 B1**
(45) Veröffentlichungstag und Bekanntmachung des Hinweises auf die Patenterteilung: **07.08.2024**
(21) Anmeldenummer: 21187653.7
(22) Anmeldetag: 26.07.2021
(51) Int. Cl.: F23D 14/82, F23G 7/07, F23Q 13/00, F25B 13/00, F25B 25/00, F25B 49/00, F24H 4/04, F24H 9/02, F24H 9/20, F25B 30/02, F24H 15/12

(54) **AKTIVE ABLUFTBEHANDLUNG FÜR EINE WÄRMEPUMPE**
ACTIVE WASTE AIR PURIFICATION FOR A HEAT PUMP
TRAITEMENT ACTIF DE L'AIR D'ÉVACUATION D'UNE POMPE À CHALEUR

(30) Priorität: 05.08.2020 DE 102020120615
(43) Veröffentlichungstag der Anmeldung: 09.02.2022
(73) Patentinhaber: Vaillant GmbH, 42859 Remscheid (DE)
(72) Erfinder: Lis, Raimund, 42369 Wuppertal (DE); Prescha, Ralf, 42929 Wermelskirchen (DE); Hiegemann, Markus, 44791 Bochum (DE); Wohlfeil, Arnold, 42799 Leichlingen (DE)
(74) Vertreter: Popp, Carsten

(56) Entgegenhaltungen:
- EP-A1- 3 106 780
- WO-A1-03/010473
- DE-A1- 102018 109 646
- US-A1- 2019 128 565

## Beschreibung

Die Erfindung betrifft irreguläre Zustände in Kältekreisen, in denen ein als Kältemittel wirkendes, gefährliches Arbeitsfluid in einem thermodynamischen Kreisprozess, wie zum Beispiel dem Clausius-Rankine-Kreisprozess, geführt wird. Vorwiegend sind dies Wärmepumpen, Klimaanlagen und Kühlgeräte, wie sie in Wohngebäuden gebräuchlich sind. Insbesondere betrifft die Erfindung eine Wärmepumpe, die innerhalb eines Wohngebäudes aufgestellt wird und auch Belüftungszwecke erfüllt.

Unter Wohngebäuden werden dabei Privathäuser, Miethauskomplexe, Krankenhäuser, Hotelanlagen, Gastronomie und kombinierte Wohn- und Geschäftshäuser verstanden, in denen Menschen dauerhaft leben und arbeiten, im Unterschied zu mobilen Vorrichtungen wie KFZ-Klimaanlagen oder Transportboxen, oder auch Industrieanlagen oder medizintechnischen Geräten. Gemeinsam ist diesen Kreisprozessen, dass sie unter Einsatz von Energie Nutzwärme oder Nutzkälte erzeugen und Wärmeverschiebungssysteme bilden.

Ein erfolgreiches Beispiel aus dem bekannten Stand der Technik ist das geoTHERM-Plus-System; wie es in der Firmendruckschrift "System geoTHERM", Vaillant GmbH 03/2009, beschrieben ist. Hierbei wird Wärme aus einer Erdbohrung gewonnen, wobei diese Erdbohrung von einem Solekreislauf durchströmt wird, wobei sie Wärme aufnimmt oder abgibt. Die Wärmepumpe selbst wie auch ihre Installationen für die Nutzer werden innerhalb eines Gebäudes aufgestellt, woraus hohe Ansprüche an die Sicherheit folgen.

Ein weiteres bekanntes System ist das "versoTherm plus" System, wie es in der Firmendruckschrift "versoTherm plus" der Vaillant GmbH 08/2018 beschrieben ist. Solche Systeme bilden den nächstliegenden Stand der Technik.

Die zum Einsatz kommenden thermodynamischen Kreisprozesse sind seit langem bekannt, ebenso die Sicherheitsprobleme, die bei der Verwendung geeigneter Arbeitsfluide entstehen können. Abgesehen von Wasser sind die bekanntesten damaligen Arbeitsfluide brennbar und giftig. Sie führten im vergangenen Jahrhundert zur Entwicklung der Sicherheitskältemittel, die aus fluorierten Kohlenwasserstoffen bestanden. Es zeigte sich jedoch, dass diese Sicherheitskältemittel die Ozonschicht schädigen, zur Klimaerwärmung führen, und dass ihre sicherheitstechnische Unbedenklichkeit zu konstruktiven Unachtsamkeiten führte. Bis zu 70 % des Umsatzes entfiel auf den Nachfüllbedarf undichter Anlagen und deren Leckageverluste, der hingenommen wurde, solange dies im Einzelfall als wirtschaftlich vertretbar empfunden wurde und Bedarf an Ersatzbeschaffung förderte.

Der Einsatz dieser Kältemittel wurde aus diesem Grund Restriktionen unterworfen, in der Europäischen Union beispielsweise durch die F-Gas-Verordnung (EU) 517/2014. Dadurch werden praktisch alle ungefährlichen Sicherheitskältemittel verboten und es bleiben nur noch gefährliche Arbeitsfluide und Wasser zur Auswahl. Gefährlich bedeutet in diesem Fall, dass sie entweder giftig sind, wie zum Beispiel Ammoniak, oder entzündlich oder explosiv in Verbindung mit Luftsauerstoff sein können, jedoch kaum umweltschädlich sind.

Die auftretenden Probleme bei der Sicherheitsauslegung solcher Anlagen werden in der WO 2015/032905 A1 anschaulich beschrieben. So liegt die untere Zündgrenze von R290 als Arbeitsfluid etwa bei 1,7 Volumenprozent in Luft, was 38 g/m³ in Luft entspricht. Sofern der Kälteprozess in einem ihn umgebenden, hermetisch abgeschlossenen, ansonsten aber luftgefüllten Raum mit dem Arbeitsfluid R290 durchgeführt wird, stellt sich das Problem der Erkennung einer kritischen, explosiven Situation nach einer Störung, bei der das Arbeitsfluid in diesen hermetisch abgeschlossenen Raum austritt. Elektrische Sensoren zur Erkennung kritischer Konzentrationen sind nur schwierig explosionsgeschützt auszuführen, weswegen gerade die Propan-Erkennung durch die Sensoren selbst das Explosionsrisiko erheblich verschärft, ausgenommen hiervon sind Infrarotsensoren. R290 ist auch giftig, bei Inhalation oberhalb einer Konzentration von ca. 2 g/m³ stellen sich narkotische Effekte, Kopfschmerzen und Übelkeit ein. Dies betrifft Personen, die ein erkanntes Problem vor Ort lösen sollen, noch bevor Explosionsgefahr entsteht.

Die EP 3 106 780 B1 beschreibt eine Absorptionswärmepumpe, die eine Sorptionsstufe enthält. Im Falle einer Leckage saugt ein Gebläse freiwerdendes Kältemittel über ein Bindemittel ab und führt die Reste stromab einem Brenner zu, der als elektrisch betriebene Heizwendel, als Pilotflamme oder als katalytischer Brenner ausgeführt ist.

Die WO 03/010473 A1 beschreibt eine Split-Wärmepumpe, die mit einem Kohlenwasserstoff als Kältemittel betrieben wird. Im Fall einer Leckage im Kältekreis und einem Austritt von gasförmigem Kältemittel in das innen aufgestellte Wärmepumpengehäuse wird das Kältemittel-Luftgemisch im Wärmepumpengehäuse abgesaugt und durch eine ebene Leitung ins Freie gefördert. Zum Ausgleich der Massenbilanz im Wärmepumpengehäuse wird gleichzeitig Luft in das Wärmepumpengehäuse gefördert. Fig. 6 zeigt dabei wie dieses Durchlüften mit einem doppelwandigen Rohr, welches durch eine Mauer nach draußen geführt wird, technisch ideal durchgeführt werden kann.

Die Aufgabe der Erfindung ist daher, eine alternative Vorrichtung und ein Verfahren für eine sichere und effiziente Abluftbehandlung für eine Wärmepumpe bereitzustellen, die in einem Wohngebäude aufgestellt ist, und in der ein linksdrehender thermodynamischer Kreisprozess in einem geschlossenen, hermetisch dichten Arbeitsfluidumlauf mittels eines entzündlichen Arbeitsfluids durchgeführt wird.

Die Erfindung löst diese Aufgabe zur sicheren Durchführung eines linksdrehenden thermodynamischen Kreisprozesses in einer Wärmepumpe mittels eines gefährlichen Arbeitsfluids, welches in einem geschlossenen, hermetisch dichten Arbeitsfluidumlauf geführt wird, geeignet zur Aufstellung in einem Gebäude, aufweisend
- ein Wärmepumpengehäuse,
- mindestens einen Verdichter für Arbeitsfluid,
- mindestens eine Entspannungseinrichtung für Arbeitsfluid,
- mindestens zwei Wärmeübertrager für Arbeitsfluid mit jeweils mindestens zwei Anschlüssen für Wärmeüberträgerfluide,
- ein Kapselgehäuse innerhalb des Wärmepumpengehäuses, welches alle Apparate und Armaturen umschließt, die von Arbeitsfluid durchströmt werden,
- eine Abgasoxidationsvorrichtung, die mit dem Inneren des Kapselgehäuses verbunden ist,
- ein Fördergebläse für Abluft aus dem Kapselgehäuse in die Abgasoxidationsvorrichtung,
- eine Zuluftöffnung für das Kapselgehäuse,
- einen Zuluftkanal für die Abgasoxidationsvorrichtung aus der Umgebung der Wärmepumpe,
- einen Abluftkanal aus der Abgasoxidationsvorrichtung in die Umgebung der Wärmepumpe.

Zuluftkanal und Abluftkanal können dabei auch aus einem Stück bestehen. Der Zuluftkanal ist aus Sicherheitsgründen mit einer Rückflusssicherung zu versehen.

Sollte also eine Leckage auftreten, bewirkt der dabei entstehende Überdruck, dass das Luftgemisch aus dem Kapselgehäuse direkt in die Abgasoxidationsvorrichtung entweicht, wo es unschädlich gemacht wird. Zu Beginn einer Leckage ist die Konzentration des Arbeitsfluids in der Luft im Kapselgehäuse gering, er kann je nach Größe der Leckage aber schnell ansteigen. Davon hängt ab, ob und gegebenenfalls wieviel zusätzliche Luft in die Abgasoxidationsvorrichtung zugeführt werden muss.

Eine Ausgestaltung der Erfindung sieht daher vor, dass ein Gassensor im Kapselgehäuse vorgesehen wird, der das Fördergebläse für Abluft einschaltet, falls gasförmiges Arbeitsfluid erkannt wird. Eine verbesserte Ausgestaltung sieht vor, dass eine Konzentrationsmessung für gasförmiges Arbeitsfluid im Kapselgehäuse vorgenommen wird und das Fördergebläse für Abluft entsprechend der Konzentration an Arbeitsfluid oder innerhalb eines Einstellbereichs für Sauerstoffüberschuss (Lambda-Fenster) geregelt wird.

Weitere Ausgestaltungen betreffen die Abgasoxidationsvorrichtung. In einer Ausgestaltung wird vorgesehen, dass die Abgasoxidationsvorrichtung
- eine Zündung,
- eine Zündkammer und
- Gitter mit Flammendurchschlagschutz aufweist.

Anstelle von Gittern können auch Netze mit entsprechenden Maschenweiten oder poröse Keramikkörper verwendet werden. Die erforderliche Spaltweite ist die des "Quenching-Durchmessers", was der Grenzschicht für unverbranntes Gas entlang einer kalten Wandfläche entspricht.

In einer Ausgestaltung ist vorgesehen, dass in dem Luftkanal für Spülluft ein Fördergebläse vorgesehen wird, welches explosionsgeschützt ausgeführt ist. Das Kapselgehäuse muss hierfür über einen Luftzugang verfügen, der entweder im Luftkanal integriert ist oder der als Öffnungen im Kapselgehäuse ausgeführt wird, durch welche Luft einströmen, aber nicht ausströmen kann, beispielsweise durch Jalousieklappen, die nur in eine Richtung zu öffnen sind.

Alternativ kann die Regelung der Verbrennung auch über einen Venturi erfolgen, wobei der Anschluss an die Unterdruckkammer des Wärmepumpengehäuses den Gasanschluss darstellt, so dass dieser Aufbau mit nur einem Spülluftgebläse betrieben wird. Die Regelung der Medien-Zuführung aus der Wärmepumpe erfolgt dann über eine variable Blendenöffnungsregelung, die mit dem Gassensor realisiert wird.

Weitere Ausgestaltungen betreffen die Abluftoxidation. Dies erfolgt vorzugsweise katalytisch. Hierzu wird in die Zündkammer ein Katalysator eingesetzt, dieser Katalysator kann auch eine poröse Keramik sein, die gleichzeitig als Flammschutzgitter wirkt.

Wird beispielsweise R290 mit der Hauptkomponente Propan als Arbeitsfluid genutzt, findet ab 500 °C eine Oxidation oder Dehydrogenisierung statt. Bei dieser Oxidation entsteht ein Alkohol. Dieser Alkohol ist wasserlöslich und ist bei der geringen Konzentration ein geringeres Problem als Propan. Bei der Dehydrogenisierung entsteht Propen. Das kann aufgrund der Doppelbindung besser abgebaut werden. Das heißt, die Abgasoxidation kann auch gestuft erfolgen, indem zunächst eine katalytische Umsetzung bei geringerer Temperatur erfolgt und erst nachfolgend eine weitere Totaloxidation zu CO₂ und Wasser vorgenommen wird.

Auf diese Weise kann mit Co(III)-CF₃COOH und/oder Pt/SrTiO₃ als Katalysatoren in einer ersten Stufe eine Oxidation von Propan bei 150-180 °C durchgeführt werden. In einer zweiten Stufe wird mit dem Katalysator Ru/CeO₂ nachfolgend eine Totaloxidation bei 150 °C erreicht. Es ist bei dieser katalytischen Oxidation nicht erforderlich, das gesamte Arbeitsfluid im Abgas zu oxidieren, es muss lediglich gesichert sein, dass das Abgas hinter der Oxidation deutlich unterhalb der unteren Zündgrenze für das betreffende Arbeitsfluid liegt, denn diese wird durch die weitere Verdünnung mit Umgebungsluft nicht mehr unterschritten.

Weitere Ausgestaltungen betreffen die Zündung. Diese kann mittels einer Glühkerze, eines Piezo-Elements oder mittels UV-Licht erfolgen. Die Zündung hängt auch davon ab, ob ein Katalysator verwendet wird, sofern ein Katalysator auf einer porösen Festkeramik zum Einsatz kommt, kann die Zündung auch mittels UV-Licht, welches auf diesen Festkörper gerichtet ist, erfolgen. Auch ein UV-Laser kann dazu eingesetzt werden.

Je nach detektierter Gaskonzentration kann entweder nur das Fördergebläse zur Zündkammer aus dem Kapselgehäuse aktiviert werden, was bei kleineren Konzentrationen vorzunehmen ist, oder es wird zusätzlich die Zwangsbelüftung mittels des Fördergebläses am Fuß des Luftkanals aktiviert, was bei größeren Konzentrationen an Arbeitsfluid oder schnellen Konzentrationsanstiegen zu erfolgen hat, um einen ausreichenden Luftüberschuss zu gewährleisten. Bei sehr kleinen Konzentrationen, die kein zündfähiges Gemisch hervorrufen, kann auf die Zündung in der Zündkammer auch verzichtet werden, da durch die nachfolgende Verdünnung mit weiterer Luft sich auch in der Folge kein zündfähiges Gemisch einstellen kann.

Wichtig ist aber immer, dass die Dichtigkeit des Reaktionsraumes auf Dauer sichergestellt ist.

Die Erfindung wird nachfolgend näher erläutert. Dabei zeigen

| | |
|---|---|
| - Fig. 1 | schematisch eine Wärmepumpe nach dem Stand der Technik, die in einem Wohngebäude steht, |
| - Fig. 2 | dieselbe Wärmepumpe mit der entsprechenden Sicherheitsausstattung und |
| - Fig.3 | ein Beispiel einer Abgasoxidationsvorrichtung. |

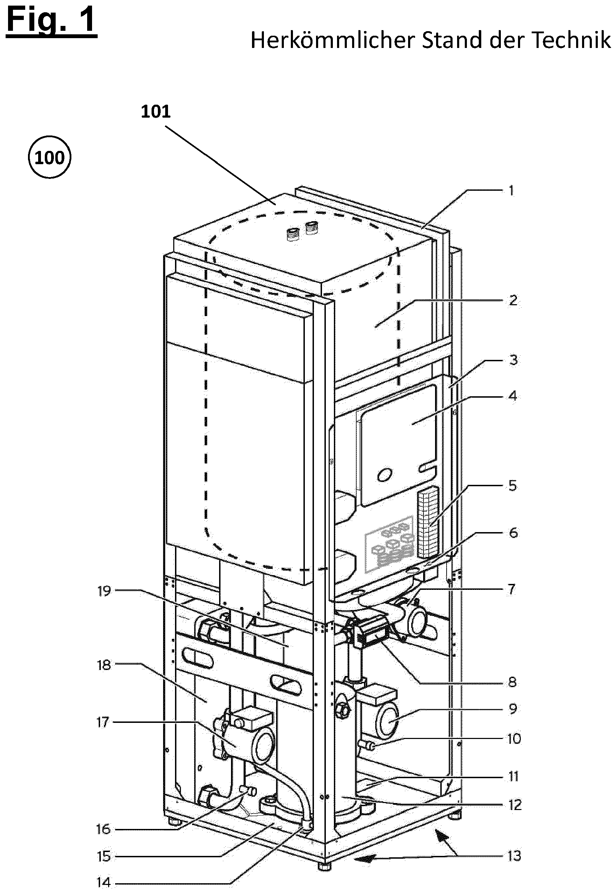

Fig. 1 zeigt ein Wohngebäude 100, welches mit einer Sole-Wasser-Wärmepumpe 101, die auch als Heißwassergerät genutzt wird, ausgestattet ist. Die Sole-Wasser-Wärmepumpe 101 weist im oberen Teil die Warmwasserelemente, wie etwa den Trinkwasserspeicher 2, die elektrische Zusatzheizung 7 sowie den Sicherheitstemperaturbegrenzer 6 und einen Leitungsführungskanal 1 auf. An der Vorderfront sind ein Elektroschaltkasten 3 mit einer Reglerplatine 4 und ein Anschluss für die Spannungsversorgung 5 vorgesehen.

Im unteren Teil sind die thermodynamischen Apparate angeordnet, die das Arbeitsfluid im Kältekreis führen, dies sind der Kompressor 12, das Expansionsventil 14, der Verdampfer 18, der Verflüssiger 19 sowie das 3-Wege-Ventil 8, hinzu kommen die Pumpen für die Wärmeträgerfluide, dies sind die Heizkreispumpe 9 und die Solepumpe 17, sowie die Füll- und Entleerventile für den Heizkreislauf 10 und den Solekreislauf 16.

Es ist dabei frei wählbar, ob diese Anordnungen in der oben beschriebenen Weise vorgenommen werden, oder ob der Warmwasserteil und der Kältekreis nebeneinander oder genau andersrum übereinander angeordnet werden. Im Bodenbereich befinden sich das Typenschild 11, die Griffmulden 13 und die Kondensatwanne 15.

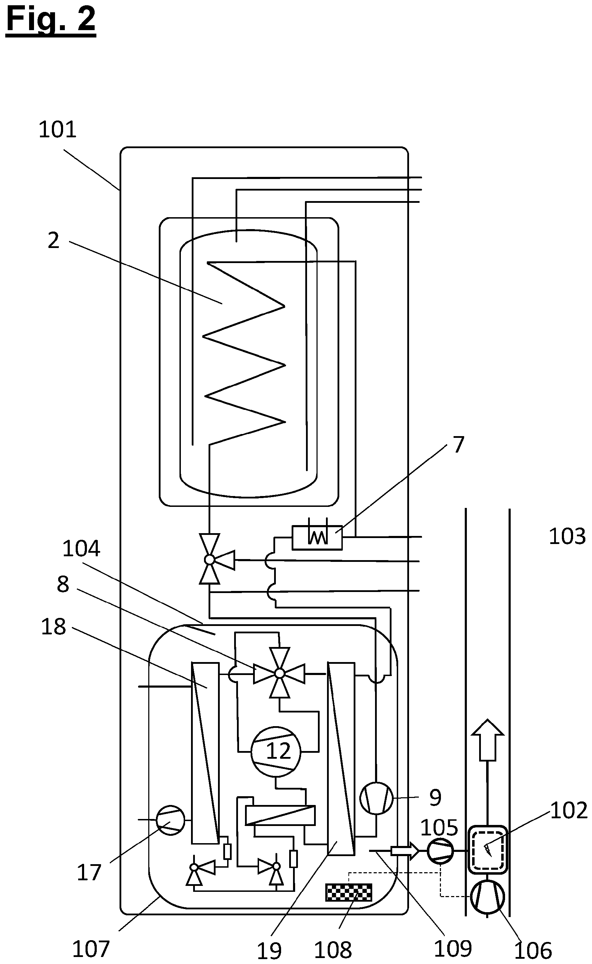

Fig. 2 zeigt die Änderungen durch das Sicherheitskonzept. Als erstes wird der Teil, in dem sich die thermodynamischen Apparate befinden, durch ein Kapselgehäuse 107 gekapselt. Diese Kapselung ist einerseits nach außen hin dicht, es kann jedoch Luft von außen über eine Zuluftöffnung 104 einströmen, wenn ein Unterdruck entsteht.

Vom Kapselgehäuse 107 führt ein Luftkanal 103, der sowohl den Zuluftkanal als auch den Abluftkanal bildet, in den Aufstellungsraum, wobei die Luft aus dem Kapselgehäuse 107 über eine Abzugsvorrichtung 109, ein Fördergebläse 105 und eine Zündkammer 102 in den Luftkanal 103 geführt wird. Sobald sich eine Leckage ergibt, steigt durch das austretende Arbeitsfluid der Druck im Kapselgehäuse und das Arbeitsfluid-Luftgemisch entweicht durch die Abzugsvorrichtung 109 in die Zündkammer 102. Wenn das Gemisch zündfähig ist, erfolgt eine Zündung und das Arbeitsfluid oxidiert, wobei es sich erwärmt. Durch die Kaminwirkung steigt es im Luftkanal 103 auf. Zu diesem Zeitpunkt ist der Luftzugang durch das Fördergebläse 106 noch verschlossen, das Abgas kann nur nach oben in den Aufstellungsraum entweichen.

Gleichzeitig erfolgt die Detektion des Arbeitsfluids im Gassensor 108. Dadurch wird das Fördergebläse 105 gestartet und die Menge der Luft, die aus dem Kapselgehäuse 107 abgezogen wird, steigt derart, dass über die Zuluftöffnung 104 Luft nachströmt, die der Spülung des Kapselgehäuses dient. Falls die Konzentration, die vom Gassensor 108 gemessen wird, danach immer noch ansteigt, wird auch das Fördergebläse 106 gestartet, damit gewährleistet ist, dass in der Abgasoxidationsvorrichtung immer ein Luftüberschuss vorhanden ist. Je nachdem, wie fein der Gassensor die Konzentrationen ermitteln kann, ist eine Regelung der Fördergebläse 105 und 106 zur Einstellung eines idealen Luftüberschusses vorzunehmen.

Das Fördergebläse 106 kann auch eingeschaltet werden, um die Zündkammer zu kühlen, indem ein ständiger Luftstrom außen um die Zündkammer herumgeführt wird. Die beiden Fördergebläse sind explosionsgeschützt auszuführen, für den Fall eines Stromausfalls ist eine akkubetriebene Notstromversorgung einzurichten.

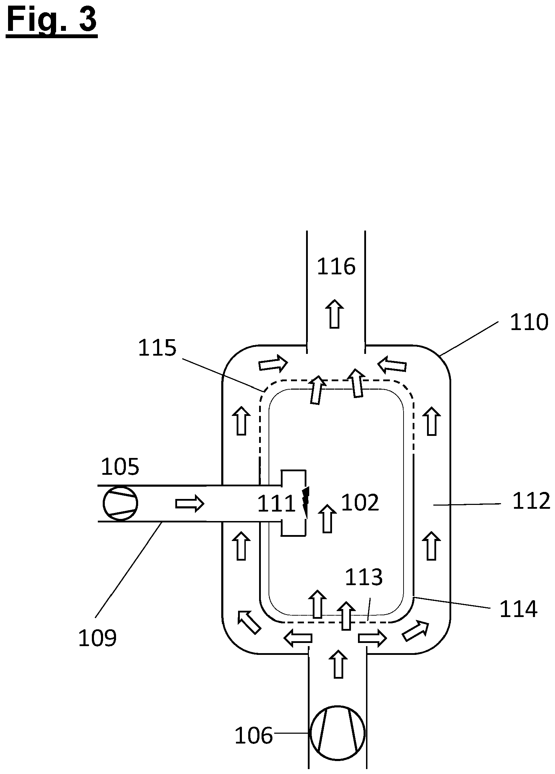

Fig. 3 zeigt eine beispielhafte Ausführungsform einer Abgasoxidationsvorrichtung 110. Diese ist ausgestattet mit einer Zündvorrichtung 111, die in kurzen Abständen Zündfunken erzeugt. Sofern über den Sauganschluss 109 aus dem Kapselgehäuse 107 ein zündfähiges Gemisch an der Zündvorrichtung 111 vorbeiströmt, findet eine Zündung in der Zündkammer 102 statt. Bei diesem Verbrennungsvorgang kann viel Wärme entstehen, um die Zündkammer 102 zu kühlen, wird daher ein Umströmungsbereich 112 vorgesehen, den Luftstrom hierfür liefert das Fördergebläse 106.

Der Umströmungsbereich 112 wird innen von der Zündkammer 102 begrenzt durch ein oder mehrere Einlassgitter 113, ein oder mehrere Schutzbleche 114 und ein oder mehrere Auslassgitter. Um ein Durchschlagen von Flammen in Form einer Deflagration zu verhindern, sind die Öffnungen der Gitter entsprechend internationaler Normen für Flammendurchschlagsicherungen dimensioniert. Die Strömungsführung wird dabei in Fig. 3 durch Pfeile gezeigt. Als Abgasauslass dient ein Kaminrohr.

### Bezugszeichenliste

- 1: Leitungsführungskanal
- 2: Trinkwasserspeicher
- 3: Elektroschaltkasten
- 4: Reglerplatine
- 5: Anschluss Spannungsversorgung
- 6: Sicherheitstemperaturbegrenzer STB der Zusatzheizung
- 7: Elektrische Zusatzheizung
- 8: 3-Wege-Ventil
- 9: Heizkreispumpe
- 10: Füll-und Entleerventil Heizungskreislauf
- 11: Typenschild
- 12: Kompressor
- 13: Griffmulden
- 14: Expansionsventil
- 15: Kondensatwanne
- 16: Füll- und Entleerventil Solekreislauf
- 17: Solepumpe
- 18: Verdampfer
- 19: Verflüssiger
- 100: Wohngebäude
- 101: Wärmepumpe
- 102: Zündkammer
- 103: Luftkanal / Zuluftkanal / Abluftkanal
- 104: Zuluftöffnung
- 105: Fördergebläse
- 106: Fördergebläse
- 107: Kapselgehäuse
- 108: Gassensor
- 109: Sauganschluss
- 110: Abgasoxidationsvorrichtung
- 111: Zündvorrichtung
- 112: Umströmungsbereich
- 113: Einlassgitter
- 114: Schutzblech
- 115: Auslassgitter
- 116: Abgasauslass

## Patentansprüche

1. Wärmepumpe zur sicheren Durchführung eines linksdrehenden thermodynamischen Kreisprozesses mittels eines gefährlichen Arbeitsfluids, welches in einem geschlossenen, hermetisch dichten Arbeitsfluidumlauf geführt wird, geeignet zur Aufstellung in einem Gebäude, aufweisend
- ein Wärmepumpengehäuse,
- mindestens einen Verdichter (12) für Arbeitsfluid,
- mindestens eine Entspannungseinrichtung (14) für Arbeitsfluid,
- mindestens zwei Wärmeübertrager (18,19) für Arbeitsfluid mit jeweils mindestens zwei Anschlüssen für Wärmeüberträgerfluide,
- ein Kapselgehäuse (107) innerhalb des Wärmepumpengehäuses, welches alle Apparate und Armaturen umschließt, die von Arbeitsfluid durchströmt werden,
**dadurch gekennzeichnet, dass**
- eine Abgasoxidationssvorrichtung (110), die mit dem Inneren des Kapselgehäuses verbunden ist,
- mindestens ein Fördergebläse (105, 106) für Abluft aus dem Kapselgehäuse in die Abgasoxidationsvorrichtung,
- eine Zuluftöffnung (104) für das Kapselgehäuse,
- ein Zuluftkanal für die Abgasoxidationsvorrichtung aus der Umgebung der Wärmepumpe, und
- ein Abluftkanal aus der Abgasoxidationsvorrichtung in die Umgebung der Wärmepumpe vorgesehen wird.

2. Wärmepumpe nach Anspruch 1, **dadurch gekennzeichnet, dass** Zuluftkanal und Abluftkanal aus einem Stück bestehen.

3. Wärmepumpe nach einem der Ansprüche 1 oder 2, **dadurch gekennzeichnet, dass** der Zuluftkanal mit einer Rückflusssicherung versehen ist.

4. Wärmepumpe nach einem der Ansprüche 1 bis 3, **dadurch gekennzeichnet, dass** in einem Luftkanal (103) für Spülluft ein Fördergebläse (106) vorgesehen wird, welches explosionsgeschützt ausgeführt ist.

5. Wärmepumpe nach einem der Ansprüche 1 bis 4, **dadurch gekennzeichnet, dass** mindestens ein Gassensor (108) im Kapselgehäuse (107) angeordnet wird, bei dessen Alarm die Zwangsbelüftung des Kapselgehäuses (107) aktiviert wird.

6. Wärmepumpe nach Anspruch 5, **dadurch gekennzeichnet, dass** der Gassensor eine Konzentrationsmessung des gasförmigen Arbeitsfluids vornimmt und das damit Fördergebläse so geregelt wird, dass ein vorgebbarer Luftüberschuss eingestellt wird.

7. Wärmepumpe nach einem der Ansprüche 1 bis 6, **dadurch gekennzeichnet, dass** die Abgasoxidationsvorrichtung eine Zündung, eine Zündkammer (102) und Gitter oder Netze oder poröse Keramikkörper, jeweils mit Flammendurchschlagschutz, aufweist.

8. Wärmepumpe nach einem der Ansprüche 4 bis 7, **dadurch gekennzeichnet, dass** in dem Luftkanal (103) für Spülluft ein Fördergebläse vorgesehen wird, welches explosionsgeschützt ausgeführt ist.

9. Wärmepumpe nach einem der Ansprüche 7 oder 8, **dadurch gekennzeichnet, dass** in die Zündkammer (102) ein Katalysator eingesetzt wird.

10. Wärmepumpe nach Anspruch 9, **dadurch gekennzeichnet, dass** der Oxidationskatalysator auf Gittern oder Netzen oder einer porösen Keramik aufgebracht wird.

11. Wärmepumpe nach einem der Ansprüche 9 oder 10, **dadurch gekennzeichnet, dass** als Katalysatoren Co(III)-CF₃COOH und/oder Pt/SrTiO₃ eingesetzt werden.

12. Wärmepumpe nach einem der Ansprüche 9 oder 10, **dadurch gekennzeichnet, dass** als Katalysator Ru/CeO₂ eingesetzt wird.

13. Wärmepumpe nach einem der Ansprüche 9 bis 12, **dadurch gekennzeichnet, dass** zwei katalytische Oxidationsstufen eingesetzt werden, von denen in Strömungsrichtung die erste Oxidationsstufe Katalysatoren aus Co(III)-CF₃COOH und/oder Pt/SrTiO₃ aufweisen und die zweite Oxidationsstufe einen Katalysator aus Ru/CeO₂ aufweist.

14. Wärmepumpe nach Anspruch 1, **dadurch gekennzeichnet, dass** die Zündung mittels einer Glühkerze, eines Piezo-Elements oder mittels UV-Licht erfolgt.

15. Wärmepumpe nach einem der Ansprüche 9 bis 14, **dadurch gekennzeichnet, dass** die Zündung durch Bestrahlung von UV-Licht auf den Katalysator erfolgt.

16. Wärmepumpe nach Anspruch 15, **dadurch gekennzeichnet, dass** die UV-Strahlungsquelle ein UV-Laser ist.

## Claims

1. Heat pump for safely perform an anticlockwise thermodynamic cycle by means of a hazardous working fluid, which is guided in a closed, hermetically sealed working fluid circuit, suitable for installation in a building, having
- a heat pump housing,
- at least one compressor (12) for working fluid,
- at least one expansion apparatus (14) for working fluid,
- at least two heat exchangers (18, 19) for working fluid, each with at least two connections for heat exchanging fluids,
- a capsule housing (107) within the heat pump housing, which encloses all apparatus and fittings, through which working fluid flows, **characterized in that**
- an exhaust gas oxidation device (110) which is connected to the interior of the capsule housing,
- at least one conveying fan (105, 106) for exhaust air from the capsule housing into the exhaust gas oxidation device,
- a supply air opening (104) for the capsule housing,
- a supply air duct for the exhaust gas oxidation device from the environment of the heat pump, and
- an exhaust air duct is provided from the exhaust gas oxidation device into the environment of the heat pump.

2. Heat pump according to claim 1, **characterized in that** the supply air duct and the exhaust air duct consist of one piece.

3. Heat pump according to any one of claims 1 or 2, **characterized in that** the supply air duct is provided with a backflow protection device.

4. Heat pump according to any one of claims 1 to 3, **characterized in that** a conveying fan (106) is provided in an air duct (103) for purge air, which is designed to be explosion-proof.

5. Heat pump according to any one of claims 1 to 4, **characterized in that** at least one gas sensor (108) is arranged in the capsule housing (107), the alarm of which activates the forced ventilation of the capsule housing (107).

6. Heat pump according to claim 5, **characterized in that** the gas sensor carries out a concentration measurement of the gaseous working fluid and the conveying fan is regulated in such a way that a predeterminable excess air is set.

7. Heat pump according to any one of claims 1 to 6, **characterized in that** the exhaust gas oxidation device has an ignition, an ignition chamber (102) and grids or nets or porous ceramic bodies, each with flame arrester.

8. Heat pump according to any one of claims 4 to 7, **characterized in that** a conveying fan is provided in the air duct (103) for purge air, which is designed to be explosion-proof.

9. Heat pump according to any one of claims 7 or 8, **characterized in that** a catalyst is inserted in the ignition chamber (102).

10. Heat pump according to claim 9, **characterized in that** the oxidation catalyst is applied to grids or nets or a porous ceramic.

11. Heat pump according to any one of claims 9 or 10, **characterized in that** Co(III)-CF₃COOH and/or Pt/SrTiO₃ are used as catalysts.

12. Heat pump according to any one of claims 9 or 10, **characterized in that** Ru/CeO₂ is used as the catalyst.

13. Heat pump according to any one of claims 9 to 12, **characterized in that** two catalytic oxidation stages are used, of which, in the direction of flow, the first oxidation stage has catalysts made of Co(III)-CF₃COOH and/or Pt/SrTiO₃ and the second oxidation stage has a catalyst made of Ru/CeO₂.

14. Heat pump according to claim 1, **characterized in that** the ignition takes place by means of a glow plug, a piezo element or by means of UV light.

15. Heat pump according to any one of claims 9 to 14, **characterized in that** the ignition takes place by irradiation of UV light on the catalyst.

16. Heat pump according to claim 15, **characterized in that** the UV radiation source is a UV laser.

## Revendications

1. Pompe à chaleur pour la mise en oeuvre sûre d'un processus à cycle thermodynamique orienté à gauche au moyen d'un fluide de travail dangereux qui est guidé dans un circuit de fluide de travail fermé et hermétiquement étanche, adaptée pour être installée dans un bâtiment, présentant
- un boîtier de pompe à chaleur,
- au moins un compresseur (12) pour fluide de travail,
- au moins un dispositif de détente (14) pour fluide de travail,
- au moins deux échangeurs de chaleur (18, 19) pour fluide de travail avec respectivement au moins deux
raccords pour fluides d'échangeur de chaleur,
- un boîtier de capsule (107) à l'intérieur du boîtier de pompe à chaleur qui renferme tous les appareils et armatures qui sont traversés par du fluide de travail, **caractérisée en ce que**
- un dispositif d'oxydation de gaz d'échappement (110) qui est connecté à l'intérieur du boîtier de capsule,
- au moins un ventilateur de transport (105, 106) pour l'air d'évacuation du boîtier de capsule dans le dispositif d'oxydation de gaz d'échappement,
- une ouverture d'arrivée d'air (104) pour le boîtier de capsule,
- un canal d'arrivée d'air pour le dispositif d'oxydation de gaz d'échappement provenant de l'environnement de la pompe à chaleur, et
- un canal d'évacuation d'air du dispositif d'oxydation de gaz d'échappement vers l'environnement de la pompe à chaleur sont prévus.

2. Pompe à chaleur selon la revendication 1, **caractérisée en ce que** le canal d'arrivée d'air et le canal d'évacuation d'air sont constitués d'un seul tenant.

3. Pompe à chaleur selon l'une quelconque des revendications 1 ou 2, **caractérisée en ce que** le canal d'arrivée d'air est doté d'un dispositif anti-refoulement.

4. Pompe à chaleur selon l'une quelconque des revendications 1 à 3, **caractérisée en ce que,** dans un canal d'air (103), un ventilateur de transport (106) est prévu pour l'air de rinçage, ventilateur qui est conçu de manière à être protégé contre les explosions.

5. Pompe à chaleur selon l'une quelconque des revendications 1 à 4, **caractérisée en ce qu'**au moins un capteur de gaz (108) dont l'alarme active la ventilation forcée du boîtier de capsule (107) est disposé dans le boîtier de capsule (107).

6. Pompe à chaleur selon la revendication 5, **caractérisée en ce que** le capteur de gaz effectue une mesure de concentration du fluide de travail gazeux et **en ce que** le ventilateur de transport est réglé de sorte qu'un excédent d'air prédéterminable soit défini.

7. Pompe à chaleur selon l'une quelconque des revendications 1 à 6, **caractérisée en ce que** le dispositif d'oxydation de gaz d'échappement présente un allumage, une chambre d'allumage (102) et des grilles ou des filets ou des corps céramiques poreux, respectivement avec une protection contre les retours de flamme.

8. Pompe à chaleur selon l'une quelconque des revendications 4 à 7, **caractérisée en ce que,** dans le canal d'air (103), un ventilateur de transport qui est conçu de manière à être protégé contre les explosions est prévu pour l'air de rinçage.

9. Pompe à chaleur selon l'une quelconque des revendications 7 ou 8, **caractérisée en ce qu'**un catalyseur est utilisé dans la chambre d'allumage (102).

10. Pompe à chaleur selon la revendication 9, **caractérisée en ce que** le catalyseur d'oxydation est appliqué sur des grilles ou des filets ou une céramique poreuse.

11. Pompe à chaleur selon l'une quelconque des revendications 9 ou 10, **caractérisée en ce que** Co(III)-CF₃COOH et/ou Pt/SrTiO₃ sont utilisés comme catalyseurs.

12. Pompe à chaleur selon l'une quelconque des revendications 9 ou 10, **caractérisée en ce que** Ru/CeO₂ est utilisé comme catalyseur.

13. Pompe à chaleur selon l'une quelconque des revendications 9 à 12, **caractérisée en ce que** deux étapes d'oxydation catalytique sont utilisées, dont, dans le sens d'écoulement, la première étape d'oxydation présente des catalyseurs en Co(III)-CF₃COOH et/ou Pt/SrTiO₃ et la première étape d'oxydation présente un catalyseur en Ru/CeO₂.

14. Pompe à chaleur selon la revendication 1, **caractérisée en ce que** l'allumage s'effectue au moyen d'une bougie de préchauffage, d'un élément piézoélectrique ou au moyen d'une lumière UV.

15. Pompe à chaleur selon l'une quelconque des revendications 9 à 14, **caractérisée en ce que** l'allumage s'effectue par irradiation du catalyseur par de la lumière UV.

16. Pompe à chaleur selon la revendication 15, **caractérisée en ce que** la source de rayonnement UV est un laser UV.
